# EUROPEAN PATENT APPLICATION

(11) **EP 4 148 394 A1**
(43) Date of publication of application: **15.03.2023**
(21) Application number: 22191091.2
(22) Date of filing: 18.08.2022
(51) Int. Cl.: G01C 23/00, G08G 5/00, G01C 21/20

(54) **METHODS AND SYSTEMS FOR MANAGING USER-CONFIGURED CUSTOM ROUTES**

(30) Priority: 06.09.2021 IN 202111040338; 20.10.2021 US 202117506444
(71) Applicant: Honeywell International Inc., Charlotte, NC 28202 (US)
(72) Inventor: KANAGARAJAN, Sivakumar, Charlotte, 28202 (US); K S, Sunil Kumar, Charlotte, 28202 (US); CROUCH, Steven Curtis, Charlotte, 28202 (US); KURUDI, Srilakshmi, Charlotte, 28202 (US)
(74) Representative: LKGlobal UK Ltd.

(57) **Abstract**

Methods and systems are provided for managing user-configured custom routes for operating a vehicle. One method involves obtaining a user-configured route for operating a vehicle, providing a first graphical user interface (GUI) display including one or more GUI elements for receiving one or more user input values defining the user-configured route, automatically generating an identifier associated with the user-configured route based on the one or more user input values, and thereafter generating a graphical representation of the user-configured route that includes the autogenerated identifier associated with the user-configured route.

## Description

### CROSS REFERENCE TO RELATED APPLICATION

The present application claims benefit of prior filed Indian Provisional Patent Application No. 202111040338, filed September 6, 2021, which is hereby incorporated by reference herein in its entirety.

### TECHNICAL FIELD

The subject matter described herein relates generally to vehicle systems, and more particularly, embodiments of the subject matter relate to aircraft systems and related graphical user interface (GUI) displays for managing user-configured custom routes.

### BACKGROUND

Published aeronautical charts, such as, for example, Instrument Approach Procedure (IAP) charts, Standard Terminal Arrival (STAR) charts, Standard Instrument Departure (SID) charts, Departure Procedures (DP), terminal procedures, approach plates, and the like, depict and describe the procedures for operating aircraft at or in the vicinity of an airport, runway, or other landing and/or departure location. These charts graphically illustrate and describe the specific procedure information and instructions (e.g., minimum descent altitudes, minimum runway visual range, final course or heading, relevant radio frequencies, missed approach procedures) to be followed or otherwise utilized by a pilot for executing a particular aircraft procedure. These charts are typically provided by a governmental or regulatory organization, such as, for example, the Federal Aviation Administration in the United States.

In some situations, such as an emergency situation, the aircraft may need to deviate from the original flight plan and an originally planned procedure. However, deviating from the original plan may require consideration of numerous pieces of information to facilitate continued safe operation, and the time-sensitive nature of the aircraft operation can increase the stress on the pilot, which, in turn, may reduce situational awareness and/or increase the likelihood of pilot error. Accordingly, it is desirable to reduce the mental workload of the pilot (or air traffic controller, or the like) and provide an alternative plan for operating the aircraft when diverting from an original flight plan. Other desirable features and characteristics will become apparent from the subsequent detailed description and the appended claims, taken in conjunction with the accompanying drawings and this background.

### BRIEF SUMMARY

Methods and systems are provided for managing user-configured custom routes for operating a vehicle, such as a contingent procedure for an aircraft. One method involves obtaining a user-configured route for operating a vehicle, providing a first graphical user interface (GUI) display including one or more GUI elements for receiving one or more user input values defining the user-configured route, automatically generating an identifier associated with the user-configured route based on the one or more user input values, resulting in an autogenerated identifier, and thereafter generating a graphical representation of the user-configured route that includes the autogenerated identifier associated with the user-configured route.

In another embodiment, a non-transitory computer-readable medium is provided having computer-executable instructions stored thereon that, when executed by a processing system, cause the processing system to obtain a user-configured route for operating an aircraft from a navigational map graphical user interface (GUI) display, provide a contingent procedure editing GUI display including one or more GUI elements for receiving one or more user input values defining the user-configured route, automatically generate an identifier associated with the user-configured route based on the one or more user input values, resulting in an autogenerated identifier, store a contingent procedure maintaining an association between the autogenerated identifier and the user-configured route, and after storing the contingent procedure, generate a graphical representation of the user-configured route that includes the autogenerated identifier associated with the contingent procedure.

In another embodiment, a system is provided that includes a display device to display a navigational map display, a user input device to receive user inputs to define a user-configured route the navigational map display; and a processing system coupled to the display device and the user input device to provide, on the display device, a contingent procedure editing graphical user interface (GUI) display including one or more GUI elements for receiving one or more user input values defining the user-configured route, automatically generate an identifier associated with the user-configured route based on the one or more user input values, resulting in an autogenerated identifier, and update a graphical representation of the user-configured route on the navigational map GUI display to include the autogenerated identifier associated with the user-configured route.

This summary is provided to describe select concepts in a simplified form that are further described in the detailed description. This summary is not intended to identify key or essential features of the claimed subject matter, nor is it intended to be used as an aid in determining the scope of the claimed subject matter.

### BRIEF DESCRIPTION OF THE DRAWINGS

Embodiments of the subject matter will hereinafter be described in conjunction with the following drawing figures, wherein like numerals denote like elements, and:
FIG. 1 is a block diagram of a system for an aircraft in an exemplary embodiment;
FIG. 2 is a flow diagram of a contingent procedure management process suitable for implementation by the aircraft system of FIG. 1 in one or more exemplary embodiments;
FIGS. 3-6 depict exemplary graphical user interface (GUI) displays suitable for presentation on a display device onboard the aircraft in the system of FIG. 1 in connection with the contingent procedure management process of FIG. 2 in accordance with one or more embodiments;
FIG. 7 is a flow diagram of a contingent procedure activation process suitable for implementation by the aircraft system of FIG. 1 in connection with the contingent procedure management process of FIG. 2 in one or more exemplary embodiments; and
FIGS. 8-9 depict exemplary graphical user interface (GUI) displays suitable for presentation on a display device onboard the aircraft in the system of FIG. 1 in connection with the contingent procedure activation process of FIG. 7 in accordance with one or more embodiments.

### DETAILED DESCRIPTION

Embodiments of the subject matter described herein generally relate to systems and methods that facilitate a pilot or other vehicle operator manually defining or otherwise configuring a custom route (e.g., by providing user inputs on a navigational map display) and automatically generate one or more identifiers associated with the user-configured route based on one or more user input values defining the route. The user-configured route is then stored or otherwise maintained in association with the autogenerated identifier(s) as a contingent procedure that may be activated or otherwise selected for use in lieu of an originally planned procedure or flight plan, for example, in the case of an emergency or occurrence of another event that interferes with adherence to the originally planned procedure. Although the subject matter is described herein primarily in an aviation context and potentially with reference to a flight plan or other aircraft procedure (e.g., a departure procedure, an approach procedure, and/or the like), it should be understood that the subject matter may be similarly utilized in other applications involving a predefined route for travel (e.g., a travel plan or travel route) or with another vehicle (e.g., automobiles, marine vessels, trains), and the subject matter described herein is not intended to be limited to use with aircraft or in an aviation environment.

In one or more exemplary embodiments, a pilot, co-pilot, air traffic controller or any other human user may utilize a mouse, a keyboard, a touchscreen, a touch panel or another suitable user input device to graphically input waypoints or other navigational reference points and/or corresponding route segments (or legs) between those points to manually construct a custom route of travel on a navigational map display. In this regard, for operation in the context of aircraft, in addition to defining a custom route of travel in a horizontal or lateral dimension, the user may also manually configure and customize the route in a vertical dimension by specifying altitude targets or constraints as well as speed targets or constraints for the various waypoints and/or route segments of the route. For example, a pilot may construct a customized alternative departure route between an airport and a particular destination waypoint or airway that the pilot would like to utilize in the event a standard departure procedure associated with a flight plan becomes unavailable or some other anomalous event occurs that interferes with execution of the standard departure procedure. In this regard, the user-configured departure route may function as a contingent departure procedure to be utilized on an as needed basis in lieu of the standard departure procedure.

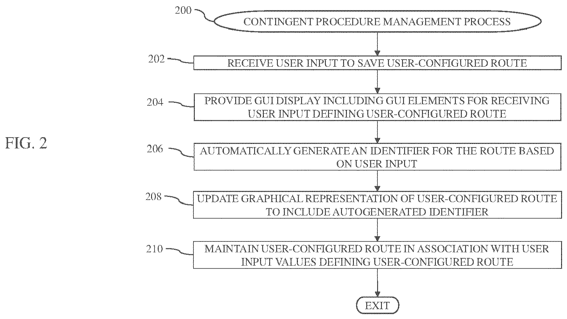

As described in greater detail below in the context of FIGS. 2-6, in exemplary embodiments, the navigational map graphical user interface (GUI) display utilized to manually construct and define the user-configured route includes a GUI element that is selectable by a user to save or otherwise maintain the user-configured route as a contingent procedure for potential future usage. In response to selection of the GUI element to save the user-configured route as a contingent procedure, a corresponding GUI display for defining the user-configured route is provided that includes GUI elements for defining attributes to be associated with the user-configured route, such as, for example, a custom name the user would like to assign the user-configured route, the type of flight procedure to be associated with the user-configured route and/or the like. After receiving user input values for attributes of the user-configured route, an identifier for the user-configured route is automatically generated using the user input values and maintained in association with the user-configured route. In this regard, the autogenerated identifier may be assigned to or otherwise utilized to rename one or more user-created waypoints that are part of the user-configured route. The graphical representation of the user-configured route on the navigational map GUI display is dynamically updated to indicate that the depicted route has been saved as a contingent procedure (e.g., by rendering the user-configured route using a color and/or other visually distinguishable graphical characteristics associated with contingent procedures) and display the identifier for the saved contingent procedure to the user. Thereafter, the user may utilize the identifier to subsequently retrieve the saved contingent procedure and previously-configured custom route from a database or other data storage element that maintains contingent procedures available for recall. In some embodiments, the autogenerated identifier and corresponding user-configured route and defined attributes are transmitted or otherwise broadcast to one or more additional aircraft or other destination systems over a suitable communications network (e.g., a cellular network, a wide area network, and/or the like).

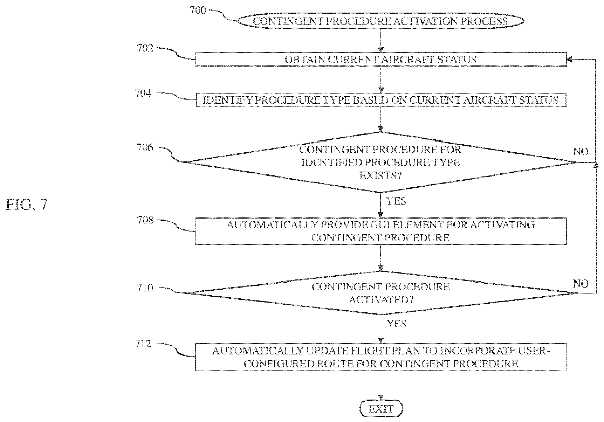

As described in greater detail below in the context of FIGS. 7-9, in some embodiments, the current status of the aircraft is continually monitored to detect or otherwise identify when a previously-configured and saved contingent procedure associated with a type of flight procedure relevant to the current aircraft status exists. When a contingent procedure matching the type of flight procedure relevant to the current aircraft status exists, one or more selectable GUI elements may be provided on a GUI display device that are capable of allowing a pilot or other user to swap or otherwise substitute the contingent procedure for the current procedure that is being displayed onboard the aircraft and/or being flown by the aircraft. For example, selection of the GUI element to swap the contingent procedure may result in a navigational map GUI display dynamically updating to depict a graphical representation of the user-configured route associated with the identified contingent procedure in lieu of a previously depicted procedure and/or flight plan. Additionally, in some embodiments, selection of the GUI element may activate the contingent procedure, for example, by automatically updating or otherwise modifying the flight plan to incorporate the waypoints and their associate altitude, speed and/or or other criteria that were previously customized and configured for the contingent procedure in place of the waypoints, altitudes, speeds and/or other criteria associated with the originally planned flight procedure according to the original flight plan. For example, waypoints associated with a standard departure procedure may be removed from or otherwise deactivated within the context of the active flight plan maintained by a flight management system (FMS) and replaced with the customized waypoints associated with the contingent procedure. In this manner, upon activation of the contingent procedure, the FMS, the autopilot and/or other automation onboard the aircraft may automatically begin autonomously executing the user-configured route associated with the predefined contingent procedure.

By virtue of the subject matter described herein, a predefined and user-configured custom flight procedure can be stored and quickly activated in response to an anomalous event (e.g., engine out, depressurization, noise, etc.) that may impact aircraft performance or otherwise impair the aircraft executing an originally-planned flight procedure. By automatically selecting a predefined contingent procedure of a type that is relevant to the current aircraft state, the pilot workload is reduced while also reducing the likelihood of human error in selecting the contingent procedure (e.g., inadvertent selection of the wrong type of procedure). In this manner, the swap contingent procedure GUI element(s) enables the pilot or other crew member to quickly insert the selected contingent procedure, with the FMS, autopilot and/or other onboard automation automatically loading or otherwise implementing the contingent procedure to autonomously fly the user-configured custom route with the appropriate flight modes, altitude targets and/or constraints, speed targets and/or constraints, and the like. As a result, safety and situational awareness may be improved.

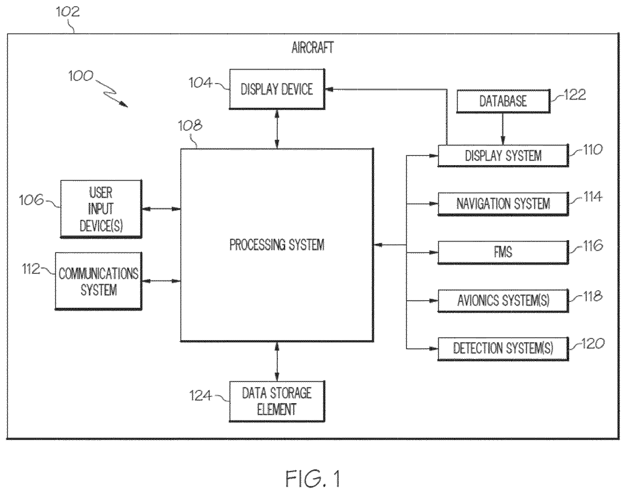

FIG. 1 depicts an exemplary embodiment of a system 100 which may be located onboard a vehicle, such as an aircraft 102. The system 100 includes, without limitation, a display device 104, a user input device 106, a processing system 108, a display system 110, a communications system 112, a navigation system 114, a flight management system (FMS) 116, one or more avionics systems 118, one or more detection systems 120, and one or more data storage elements 122, 124 cooperatively configured to support operation of the system 100, as described in greater detail below.

In exemplary embodiments, the display device 104 is realized as an electronic display capable of graphically displaying flight information or other data associated with operation of the aircraft 102 under control of the display system 110 and/or processing system 108. In this regard, the display device 104 is coupled to the display system 110 and the processing system 108, and the processing system 108 and the display system 110 are cooperatively configured to display, render, or otherwise convey one or more graphical representations or images associated with operation of the aircraft 102 on the display device 104, as described in greater detail below. In various embodiments, the display device 104 may be realized as a multifunction control display unit (MCDU), cockpit display device (CDU), primary flight display (PFD), navigation display, or any other suitable multifunction monitor or display suitable for displaying various symbols and information described herein. The display device 104 may be configured to support multi-colored or monochrome imagery, and the display device could include or otherwise be realized using a liquid crystal display (LCD), a light emitting diode (LED) display, an organic light emitting diode (OLED) display, a heads-up display (HUD), a heads-down display (HDD), a plasma display, a projection display, a cathode ray tube (CRT) display, or the like.

The user input device 106 is coupled to the processing system 108, and the user input device 106 and the processing system 108 are cooperatively configured to allow a user (e.g., a pilot, co-pilot, or crew member) to interact with the display device 104 and/or other elements of the aircraft system 100. Depending on the embodiment, the user input device 106 may be realized as a keypad, touchpad, keyboard, mouse, touch panel (or touchscreen), joystick, knob, line select key or another suitable device adapted to receive input from a user. In some embodiments, the user input device 106 is realized as an audio input device, such as a microphone, audio transducer, audio sensor, or the like, that is adapted to allow a user to provide audio input to the aircraft system 100 in a "hands free" manner without requiring the user to move his or her hands, eyes and/or head to interact with the aircraft system 100.

In some embodiments, the user input device 106 is realized as a tactile user input device capable of receiving free-form user input via a finger, stylus, pen, or the like. Tactile user input may be received or detected using an array of sensors that are configured to detect contact or proximity to a surface using any number of different technologies (e.g., resistive, capacitive, magnetic, acoustic, optical, infrared and/or the like) which are not germane to this disclosure. In some embodiments, the user input device 106 is integrated with an instance of a display device 104 to provide a touchscreen, that is, an array of sensors arranged adjacent or proximate to an electronic display that are configured to detect contact to the surface of the display and generate corresponding output signals indicative of coordinate locations on the display that were touched or otherwise contacted by a user.

Still referring to FIG. 1, the processing system 108 generally represents the hardware, circuitry, processing logic, and/or other components configured to facilitate communications and/or interaction between the elements of the aircraft system 100 and perform additional processes, tasks and/or functions to support operation of the aircraft system 100, as described in greater detail below. Depending on the embodiment, the processing system 108 may be implemented or realized with a general purpose processor, a controller, a microprocessor, a microcontroller, a content addressable memory, a digital signal processor, an application specific integrated circuit, a field programmable gate array, any suitable programmable logic device, discrete gate or transistor logic, processing core, discrete hardware components, or any combination thereof, designed to perform the functions described herein. In practice, the processing system 108 includes processing logic that may be configured to carry out the functions, techniques, and processing tasks associated with the operation of the aircraft system 100 described in greater detail below. Furthermore, the steps of a method or algorithm described in connection with the embodiments disclosed herein may be embodied directly in hardware, in firmware, in a software module executed by the processing system 108, or in any practical combination thereof. In accordance with one or more embodiments, the processing system 108 includes or otherwise accesses a data storage element, such as a memory (e.g., RAM memory, ROM memory, flash memory, registers, a hard disk, or the like) or another suitable non-transitory short or long term storage media capable of storing computer-executable programming instructions or other data for execution that, when read and executed by the processing system 108, cause the processing system 108 to execute and perform one or more of the processes, tasks, operations, and/or functions described herein.

The display system 110 generally represents the hardware, firmware, processing logic and/or other components configured to control the display and/or rendering of one or more displays pertaining to operation of the aircraft 102 and/or systems 112, 114, 116, 118, 120 on the display device 104 (e.g., synthetic vision displays, navigational maps, and the like). In this regard, the display system 110 may access or include one or more databases 122 suitably configured to support operations of the display system 110, such as, for example, a terrain database, an obstacle database, a navigational database, a geopolitical database, a terminal airspace database, a special use airspace database, or other information for rendering and/or displaying navigational maps and/or other content on the display device 104. In this regard, in addition to including a graphical representation of terrain, a navigational map displayed on the display device 104 may include graphical representations of navigational reference points (e.g., waypoints, navigational aids, distance measuring equipment (DMEs), very high frequency omnidirectional radio ranges (VORs), and the like), designated special use airspaces, obstacles, and the like overlying the terrain on the map. In one or more exemplary embodiments, the display system 110 accesses a synthetic vision terrain database 122 that includes positional (e.g., latitude and longitude), altitudinal, and other attribute information (e.g., terrain type information, such as water, land area, or the like) for the terrain, obstacles, and other features to support rendering a three-dimensional conformal synthetic perspective view of the terrain proximate the aircraft 102, as described in greater detail below.

As described in greater detail below, in one or more exemplary embodiments, the processing system 108 includes or otherwise accesses a data storage element 124 (or database), which maintains information regarding airports and/or other potential landing locations (or destinations) for the aircraft 102. In this regard, the data storage element 124 maintains an association between a respective airport, its geographic location, runways (and their respective orientations and/or directions), instrument procedures (e.g., approaches, arrival routes, and the like), airspace restrictions, and/or other information or attributes associated with the respective airport (e.g., widths and/or weight limits of taxi paths, the type of surface of the runways or taxi path, and the like). Additionally, in some embodiments, the data storage element 124 also maintains status information for the runways and/or taxi paths at the airport indicating whether or not a particular runway and/or taxi path is currently operational along with directional information for the taxi paths (or portions thereof). The data storage element 124 may also be utilized to store or maintain other information pertaining to the airline or aircraft operator (e.g., airline or operator preferences, etc.) along with information pertaining to the pilot and/or co-pilot of the aircraft (e.g., pilot preferences, experience level, licensure or other qualifications, etc.).

Still referring to FIG. 1, in one or more exemplary embodiments, the processing system 108 is coupled to the navigation system 114, which is configured to provide real-time navigational data and/or information regarding operation of the aircraft 102. The navigation system 114 may be realized as a global positioning system (GPS), inertial reference system (IRS), or a radio-based navigation system (e.g., VHF omni-directional radio range (VOR) or long range aid to navigation (LORAN)), and may include one or more navigational radios or other sensors suitably configured to support operation of the navigation system 114, as will be appreciated in the art. The navigation system 114 is capable of obtaining and/or determining the instantaneous position of the aircraft 102, that is, the current (or instantaneous) location of the aircraft 102 (e.g., the current latitude and longitude) and the current (or instantaneous) altitude (or above ground level) for the aircraft 102. The navigation system 114 is also capable of obtaining or otherwise determining the heading of the aircraft 102 (i.e., the direction the aircraft is traveling in relative to some reference). Additionally, in one or more exemplary embodiments, the navigation system 114 includes inertial reference sensors capable of obtaining or otherwise determining the attitude or orientation (e.g., the pitch, roll, and yaw, heading) of the aircraft 102 relative to earth.

In one or more exemplary embodiments, the processing system 108 is also coupled to the FMS 116, which is coupled to the navigation system 114, the communications system 112, and one or more additional avionics systems 118 to support navigation, flight planning, and other aircraft control functions in a conventional manner, as well as to provide real-time data and/or information regarding the operational status of the aircraft 102 to the processing system 108. It should be noted that although FIG. 1 depicts a single avionics system 118, in practice, the aircraft system 100 and/or aircraft 102 will likely include numerous avionics systems for obtaining and/or providing real-time flight-related information that may be displayed on the display device 104 or otherwise provided to a user (e.g., a pilot, a co-pilot, or crew member). For example, practical embodiments of the aircraft system 100 and/or aircraft 102 will likely include one or more of the following avionics systems suitably configured to support operation of the aircraft 102: a weather system, an air traffic management system, a radar system, a traffic avoidance system, an autopilot system, an autothrust system, a flight control system, hydraulics systems, pneumatics systems, environmental systems, electrical systems, engine systems, trim systems, lighting systems, crew alerting systems, electronic checklist systems, an electronic flight bag and/or another suitable avionics system.

In the illustrated embodiment, the onboard detection system(s) 120 generally represents the component(s) of the aircraft 102 that are coupled to the processing system 108 and/or the display system 110 to generate or otherwise provide information indicative of various objects or regions of interest within the vicinity of the aircraft 102 that are sensed, detected, or otherwise identified by a respective onboard detection system 120. For example, an onboard detection system 120 may be realized as a weather radar system or other weather sensing system that measures, senses, or otherwise detects meteorological conditions in the vicinity of the aircraft 102 and provides corresponding radar data (e.g., radar imaging data, range setting data, angle setting data, and/or the like) to one or more of the other onboard systems 108, 110, 114, 116, 118 for further processing and/or handling. For example, the processing system 108 and/or the display system 110 may generate or otherwise provide graphical representations of the meteorological conditions identified by the onboard detection system 120 on the display device 104 (e.g., on or overlying a lateral navigational map display). In another embodiment, an onboard detection system 120 may be realized as a collision avoidance system that measures, senses, or otherwise detects air traffic, obstacles, terrain and/or the like in the vicinity of the aircraft 102 and provides corresponding detection data to one or more of the other onboard systems 108, 110, 114, 116, 118.

In the illustrated embodiment, the processing system 108 is also coupled to the communications system 112, which is configured to support communications to and/or from the aircraft 102 via a communications network. For example, the communications system 112 may also include a data link system or another suitable radio communication system that supports communications between the aircraft 102 and one or more external monitoring systems, air traffic control, and/or another command center or ground location. In this regard, the communications system 112 may allow the aircraft 102 to receive information that would otherwise be unavailable to the pilot and/or co-pilot using the onboard systems 114, 116, 118, 120. For example, the communications system 112 may receive meteorological information from an external weather monitoring system, such as a Doppler radar monitoring system, a convective forecast system (e.g., a collaborative convective forecast product (CCFP) or national convective weather forecast (NCWF) system), an infrared satellite system, or the like, that is capable of providing information pertaining to the type, location and/or severity of precipitation, icing, turbulence, convection, cloud cover, wind shear, wind speed, lightning, freezing levels, cyclonic activity, thunderstorms, or the like along with other weather advisories, warnings, and/or watches. The meteorological information provided by an external weather monitoring system may also include forecast meteorological data that is generated based on historical trends and/or other weather observations and may include forecasted meteorological data for geographical areas that are beyond the range of any weather detection systems 120 onboard the aircraft 102. In other embodiments, the processing system 108 may store or otherwise maintain historical meteorological data previously received from an external weather monitoring system, with the processing system 108 calculating or otherwise determining forecast meteorological for geographic areas of interest to the aircraft 102 based on the stored meteorological data and the current (or most recently received) meteorological data from the external weather monitoring system. In this regard, the meteorological information from the external weather monitoring system may be operationally used to obtain a "big picture" strategic view of the current weather phenomena and trends in its changes in intensity and/or movement with respect to prospective operation of the aircraft 102.

In exemplary embodiments, the processing system 108 includes or otherwise accesses data storage element 124, which contains aircraft procedure information (or flight procedure information or instrument procedure information) for a plurality of airports and maintains the association of the aircraft procedure information and the corresponding airport. As used herein, aircraft procedure information should be understood as a set of operating parameters or instructions associated with a particular aircraft action (e.g., approach, departure, arrival, climbing, and the like) that may be undertaken by the aircraft 120 at or in the vicinity of a particular airport. In an exemplary embodiment, the aircraft procedure information for a particular aircraft action includes graphic elements (e.g., symbols for navigational reference points, navigational segments, procedure turns, and the like) that graphically illustrate that aircraft action and textual information associated with the graphic elements that further describe the operating parameters or instructions for executing that aircraft action. For example, an instrument approach procedure for an airport may include symbols and navigational segments that graphically illustrate the approach course along with procedure turns for transitioning to/from the approach course, and additionally, the approach procedure includes textual information associated with the symbols and/or navigational segments that describe the operating parameters or provide instructions for operating the aircraft at or in the vicinity of those symbols and/or navigational segments.

As used herein, an airport should be understood as referring to a location suitable for landing (or arrival) and/or takeoff (or departure) of an aircraft, such as, for example, airports, runways, landing strips, and other suitable landing and/or departure locations, and an aircraft action should be understood as referring to an approach (or landing), an arrival, a departure (or takeoff), an ascent, taxiing, or another aircraft action having associated aircraft procedure information. Each airport may have one or more predefined aircraft procedures associated therewith, wherein the aircraft procedure information for each aircraft procedure at each respective airport may be maintained by the data storage element 124. The aircraft procedure information may be provided by or otherwise obtained from a governmental or regulatory organization, such as, for example, the Federal Aviation Administration in the United States. In an exemplary embodiment, the aircraft procedure information comprises instrument procedure information, such as instrument approach procedures, standard terminal arrival routes, instrument departure procedures, standard instrument departure routes, obstacle departure procedures, or the like, traditionally displayed on a published charts, such as Instrument Approach Procedure (IAP) charts, Standard Terminal Arrival (STAR) charts or Terminal Arrival Area (TAA) charts, Standard Instrument Departure (SID) routes, Departure Procedures (DP), terminal procedures, approach plates, and the like. Depending on the embodiment, the data storage element 124 may be physically realized using RAM memory, ROM memory, flash memory, registers, a hard disk, or another suitable data storage medium known in the art or any suitable combination thereof. It should be noted that although the subject matter is described below in the context of a particular type of procedure for purposes of explanation, the subject matter is not intended to be limited to use with any particular type of aircraft procedure and may be implemented for other aircraft procedures in an equivalent manner.

It should be understood that FIG. 1 is a simplified representation of the aircraft system 100 for purposes of explanation and ease of description, and FIG. 1 is not intended to limit the application or scope of the subject matter described herein in any way. It should be appreciated that although FIG. 1 shows the display device 104, the user input device 106, and the processing system 108 as being located onboard the aircraft 102 (e.g., in the cockpit), in practice, one or more of the display device 104, the user input device 106, and/or the processing system 108 may be located outside the aircraft 102 (e.g., on the ground as part of an air traffic control center or another command center) and communicatively coupled to the remaining elements of the aircraft system 100 (e.g., via a data link and/or communications system 112). In this regard, in some embodiments, the display device 104, the user input device 106, and/or the processing system 108 may be implemented as an electronic flight bag that is separate from the aircraft 102 but capable of being communicatively coupled to the other elements of the aircraft system 100 when onboard the aircraft 102. Similarly, in some embodiments, the data storage element 124 may be located outside the aircraft 102 and communicatively coupled to the processing system 108 via a data link and/or communications system 112. Furthermore, practical embodiments of the aircraft system 100 and/or aircraft 102 will include numerous other devices and components for providing additional functions and features, as will be appreciated in the art. In this regard, it will be appreciated that although FIG. 1 shows a single display device 104, in practice, additional display devices may be present onboard the aircraft 102. Additionally, it should be noted that in other embodiments, features and/or functionality of processing system 108 described herein can be implemented by or otherwise integrated with the features and/or functionality provided by the display system 110 or the FMS 116, or vice versa. In other words, some embodiments may integrate the processing system 108 with the display system 110 or the FMS 116; that is, the processing system 108 may be a component of the display system 110 and/or the FMS 116. In yet other embodiments, various aspects of the subject matter described herein may be implemented by or at an electronic flight bag (EFB) or similar electronic device that is communicatively coupled to the processing system 108 and/or the FMS 116.

FIG. 2 depicts an exemplary embodiment of a contingent procedure management process 200 suitable for implementation by an aircraft system to manage user-configured routes and corresponding customizations for contingent procedures capable of being flown in response to an anomalous event. The various tasks performed in connection with the illustrated process may be implemented using hardware, firmware, software executed by processing circuitry, or any combination thereof. In practice, portions of the contingent procedure management process 200 may be performed by different elements of the aircraft system 100, such as, for example, the display device 104, the user input device 106, the processing system 108, the display system 110, the FMS 116 and/or one or more avionics systems 112, 114, 118, 120. It should be appreciated that the contingent procedure management process 200 may include any number of additional or alternative tasks, the tasks need not be performed in the illustrated order and/or the tasks may be performed concurrently, and/or the contingent procedure management process 200 may be incorporated into a more comprehensive procedure or process having additional functionality not described in detail herein. Moreover, one or more of the tasks shown and described in the context of FIG. 2 could be omitted from a practical embodiment of the contingent procedure management process 200 as long as the intended overall functionality remains intact.

The contingent procedure management process 200 initializes by receiving or otherwise obtaining a user input to save a user-configured route on a navigational map display (task 202). In this regard, the processing system 108 may generate, render or otherwise provide a button or similar selectable GUI element on a navigational map GUI display on the display device 104 that is selectable by a user to initiate saving a user-configured route on the navigational map GUI display as a contingent procedure to be persistently maintained in the data storage element 124.

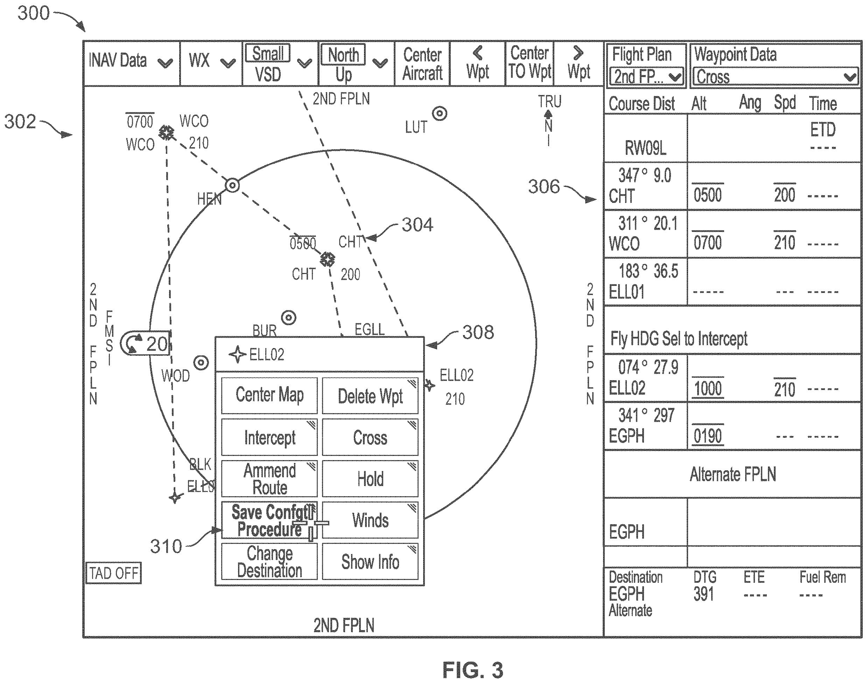

FIG. 3 depicts an exemplary GUI display 300 suitable for presentation on a display device 104 of an aircraft system 100 in connection with the contingent procedure management process 200. The GUI display 300 includes a navigational map GUI display 302 (or window) where a pilot, co-pilot, air traffic controller or another human user may utilize a user input device 106 to input, select or otherwise define waypoints or other navigational reference points and the corresponding segments (or legs) between those points to manually and graphically construct a custom route 304 depicted on the navigational map display 302. Additionally, the GUI display 300 includes a waypoint GUI display 306 (or window) that includes text boxes or other GUI elements configurable by a user to define various criteria associated with a respective waypoint of the custom route 304, such as, for example, an altitude target or constraint, a speed target or constraint, and/or the like. As depicted in FIG. 3, when the custom route 304 or a waypoint associated therewith is selected, the processing system 108 generates or otherwise provides a pop-up window or similar GUI display 308 overlying the navigational map GUI display 302 that includes a save contingent procedure button 310 (or similar selectable GUI element) that may be selected by the user to initiate or otherwise invoke the contingent procedure management process 200.

Referring again to FIG. 2, in response to receiving a user input or other indication of a desire to save a user-configured route, the contingent procedure management process 200 generates or otherwise provides a GUI display that includes GUI elements for receiving user input values defining attributes or characteristics of the user-configured route (task 204). After receiving user input values for the attributes to be associated with the contingent procedure including the user-configured route, the contingent procedure management process 200 automatically generates a unique identifier for the user-configured route using one or more of the user input values (task 206). In this regard, the autogenerated identifier based on the user input value(s) for the attributes is utilized to uniquely identify the contingent procedure that incorporates the user-configured route and maintain an association between the user-configured route and the user input attributes. The contingent procedure management process 200 dynamically updates the graphical representation of the user-configured route on the navigational map display to include the autogenerated identifier for the contingent procedure including the user-configured route and then stores or otherwise maintains the user-configured route in association with the user input attribute values using the autogenerated identifier (tasks 208, 210). For example, the processing system 108 may create an entry in the data storage element 124 for the new contingent procedure that maintains an association between the unique autogenerated identifier for the contingent procedure, the waypoints, route segments and/or other waypoint criteria defining the user-configured route and the user input values for the attributes associated with the contingent procedure.

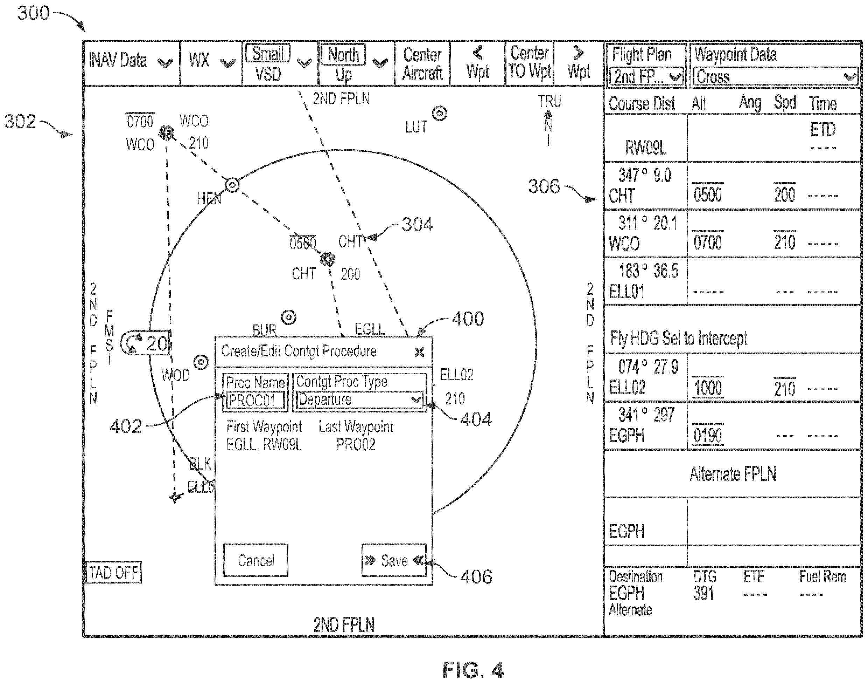

Referring to FIG. 4 with continued reference to FIGS. 1-3, in exemplary embodiments, in response to selection of the save contingent procedure button 310, the contingent procedure management process 200 generates or otherwise provides a contingent procedure editing GUI display 400 (or window) that includes GUI elements 402, 404 for receiving user input values defining attributes associated with the contingent procedure (e.g., task 204). In the illustrated embodiment, the contingent procedure editing GUI display 400 is rendered overlying the navigational map GUI display 302 in lieu of the options menu GUI display 308 within a portion of the display area of the display device 104; however, in alternative embodiments, the contingent procedure editing GUI display 400 may be rendered as a new window of GUI display occupying the entire display area of the display device 104 in lieu of the GUI display 300. In the illustrated embodiment, the contingent procedure editing GUI display 400 includes a text box 402 for receiving a sequence of user input characters, numbers, symbols and/or other textual elements corresponding to the user-created name that the user would like to associate with the contingent procedure (e.g., "PROC01"). Additionally, the contingent procedure editing GUI display 400 includes a drop-down menu 404 or similar GUI element for receiving a selected type of flight procedure to be associated with the contingent procedure (e.g., "Departure") from among the different potential types of flight procedures (e.g., "Approach," "Climb," "Arrival," etc.). In some embodiments, the contingent procedure editing GUI display 400 may include an additional drop-down menu or similar GUI element for receiving a selected type of anomalous event to be associated with the contingent procedure (e.g., "Engine Out," "Depressurization," etc."). After the user inputs the desired values for the contingent procedure attributes on the contingent procedure editing GUI display 400, the user selects or otherwise activates a button 406 or similar GUI element to save the contingent procedure.

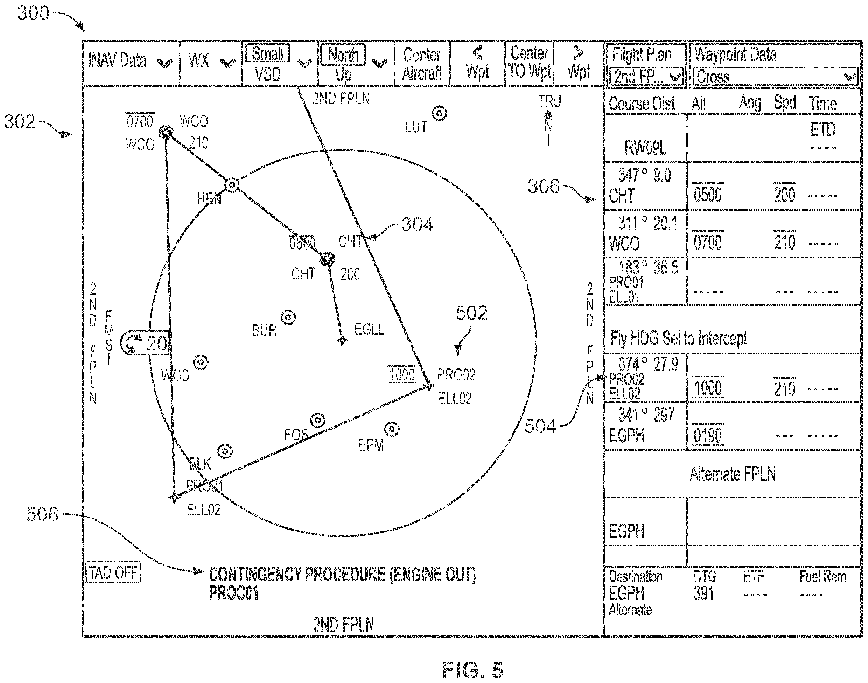

Referring to FIG. 5, after selection of the save button 406, in exemplary embodiments, the contingent procedure management process 200 automatically generates an identifier to be associated with the contingent procedure (e.g., task 206), for example, by concatenating or otherwise combining one or more user input values for the contingent procedure attributes with one or more other attributes of the user-configured route previously-configured by the user. For example, in the illustrated embodiment, the contingent procedure management process 200 concatenates the first three characters of the user input value for the name attribute of the contingent procedure (e.g., "PRO") with the last two characters (e.g., "02") of the waypoint identifier associated with the final waypoint (e.g., "&LL02") of the user-configured route to obtain the autogenerated identifier to be associated with the contingent procedure (e.g., "PRO02"). Thereafter, the contingent procedure management process 200 dynamically updates the GUI display 300 to include the autogenerated identifier associated with the user-configured route depicted on the navigational map GUI display 302 (e.g., task 208). For example, a graphical representation of the autogenerated identifier 502 may be displayed on the navigational map GUI display 302 adjacent to or otherwise in visual or graphical association with the graphical representation of the user-configured route 304 depicted on the navigational map GUI display 302, for example, by rendering the autogenerated identifier 502 adjacent to the final waypoint of the route 304. Additionally, a graphical representation of the autogenerated identifier 504 may be displayed or otherwise rendered within the waypoint GUI display 306 in connection with the waypoint identifier associated with the final waypoint of the route 304.

Still referring to FIG. 5, in exemplary embodiments, in response to creating an autogenerated identifier for the contingent procedure and saving the contingent procedure, the contingent procedure management process 200 dynamically updates the GUI display 300 to render or otherwise display the graphical representation of the user-configured route 304 using a different visually distinguishable characteristic to visually indicate or otherwise confirm, to the user, that the user-configured route 304 has been saved as a contingent procedure. For example, the contingent procedure management process 200 may dynamically update the navigational map GUI display 302 to render the user-configured route 304 associated with the contingent procedure using a different color (e.g., cyan) than the initial color (e.g., white) to visually indicate the depicted route 304 is now associated with a contingent procedure. It should be noted that the subject matter described herein is not limited to color, and in practice, any type or combination of different visually distinguishable graphical characteristics may be utilized to convey, to the user, that the route 304 has been saved as a contingent procedure (e.g., a visually distinguishable hue, tint, brightness, graphically depicted texture or pattern, contrast, transparency, opacity, animation and/or other graphical effect). Additionally, in one or more embodiments, in response to creating an autogenerated identifier for the contingent procedure and saving the contingent procedure, the contingent procedure management process 200 also dynamically updates the GUI display 300 to render or otherwise display a graphical representation 506 of the user input values for the flight procedure type associated with the contingent procedure and the procedure name associated with the contingent procedure.

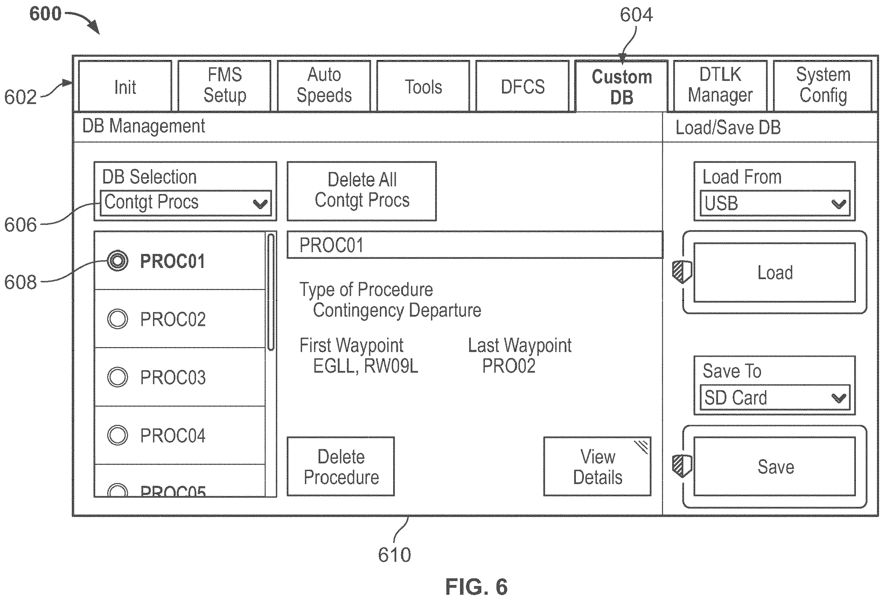

Referring now to FIG. 6 with continued reference to FIGS. 1-5, to save the contingent procedure, the processing system 108 may create an entry in the data storage element 124 for the new contingent procedure that maintains an association between the autogenerated identifier for the contingent procedure (e.g., "PRO02"), the selected flight procedure type associated with the contingent procedure (e.g., "Departure"), the name assigned to the procedure by the user (e.g., "PROC01") and the waypoints, route segments and/or other waypoint criteria defining the user-configured route 304 defined by the user using the GUI display 300. As shown in FIG. 6, the processing system 108 may render or otherwise provide a GUI display 600 on the display device 102 that includes a menu bar 602 that includes a plurality of selectable (or interactive) drop-down menu segments, including a custom database menu segment 604. When the custom database menu segment 604 is selected or otherwise activated by a user, the processing system 108 displays or otherwise renders a drop-down (or pull-down) window adjacent to and/or integral with the custom database menu segment 604 that includes GUI elements that are manipulable by the user to review the customized contingent procedures that have been saved to the data storage element 124.

FIG. 6 depicts a state of the GUI display 600 after the user has manipulated a drop-down menu 606 to select or otherwise indicate that the user would like to review contingent procedures before selecting a radio button 608 or similar GUI element associated with the PROC01 contingent procedure from among a listing of the saved contingent procedures in the data storage element 124. When the PROC01 contingent procedure is selected, a body region 610 of the drop-down window is dynamically updated to include a graphical representation of the name of the selected contingent procedure, the flight procedure type associated with the selected contingent procedure (e.g., "Contingency Departure"), the first waypoint of the user-configured route associated with the selected contingent procedure and the autogenerated identifier associated with the selected contingent procedure that is associated with or otherwise assigned to the final waypoint of the user-configured route (e.g., "PRO02"). As shown, the drop-down window associated with the custom database menu segment 604 may include additional GUI elements that are manipulable, selectable or otherwise configurable by a user to perform additional actions with respect to the selected contingent procedure, such as, for example, deleting the selected contingent procedure from the data storage element 124, viewing a graphical representation of the user-configured route or other details associated with the selected contingent procedure, and performing other actions with respect to the selected contingent procedure (e.g., transmitting, copying or otherwise moving the stored information associated with the entry for the selected contingent procedure to another data storage element or an external location). For example, in one embodiment, the drop-down window associated with the custom database menu segment 604 may include additional GUI elements that are manipulable, selectable or otherwise configurable by a user to transfer or otherwise transmit the stored information associated with the selected contingent procedure over a communications network to one or more other aircraft or other external systems.

FIG. 7 depicts an exemplary embodiment of a contingent procedure activation process 700 suitable for implementation by an aircraft system to facilitate automatically activating a saved contingent procedure in response to an anomalous event. The various tasks performed in connection with the illustrated process may be implemented using hardware, firmware, software executed by processing circuitry, or any combination thereof. In practice, portions of the contingent procedure activation process 700 may be performed by different elements of the aircraft system 100, such as, for example, the display device 104, the user input device 106, the processing system 108, the display system 110, the FMS 116 and/or one or more avionics systems 112, 114, 118, 120. It should be appreciated that the contingent procedure activation process 700 may include any number of additional or alternative tasks, the tasks need not be performed in the illustrated order and/or the tasks may be performed concurrently, and/or the contingent procedure activation process 700 may be incorporated into a more comprehensive procedure or process having additional functionality not described in detail herein. Moreover, one or more of the tasks shown and described in the context of FIG. 7 could be omitted from a practical embodiment of the contingent procedure activation process 700 as long as the intended overall functionality remains intact.

Referring to FIG. 7, with continued reference to FIGS. 1-6, the contingent procedure activation process 700 facilitates a customized contingent procedure previously-configured by a user being automatically implemented or otherwise activated when relevant to the current state of aircraft operation. In this regard, the contingent procedure activation process 700 receives or otherwise obtains status information characterizing the current operational state or context for the aircraft and identifying or otherwise determining the type of flight procedure most relevant to the current aircraft status (tasks 702, 704). For example, the processing system 108 may obtain (e.g., from FMS 116, navigation system 114 and/or other avionic systems 112, 118, 120) one or more of the following: the current phase of flight, the current autopilot mode, the current location of the aircraft 102, the current altitude (or above ground level) of the aircraft 102, the current heading (or bearing) of the aircraft 102, the current amount of fuel remaining onboard the aircraft 102, the current engine status, the current aircraft configuration (e.g., the current flap configuration, the current landing gear configuration, and/or the like) and/or other instantaneous, real-time or most recent available values for one or more parameters that quantify the current operation of the aircraft 102. Based on the current aircraft status, the processing system 108 identifies or otherwise determines which type of flight procedure is most likely to be relevant to the current aircraft operation. For example, when the aircraft is in a takeoff or climb flight phase or otherwise within a threshold distance of the departure airport, the processing system 108 may determine a departure procedure is most relevant to the current aircraft status. Conversely, when the aircraft is in a descent flight phase or within a threshold distance of a destination airport, the processing system 108 may determine an approach procedure is most relevant to the current aircraft status. It should be appreciated there are numerous different types of schemes, criteria and/or logic rules that may utilized to determine what flight procedure is most relevant to the current aircraft status, and the subject matter described herein is not limited to any particular implementation.

Still referring to FIG. 7, after identifying the relevant flight procedure type, the contingent procedure activation process 700 identifies or otherwise determines whether a contingent procedure having the identified flight procedure type exists that is also relevant to the current flight plan (task 706). For example, the processing system 108 may query or otherwise search the data storage element 124 to determine whether a contingent procedure exists of the identified flight procedure type that is also associated with or otherwise relevant to the current airport of interest (e.g., using the departure and/or destination airport associated with the currently active flight plan) and/or the current geographic location associated with the aircraft 102. When a contingent procedure having the identified flight procedure type exists that is also relevant to the current active flight plan and/or the current aircraft status, the contingent procedure activation process 700 automatically generates or otherwise provides one or more selectable GUI elements on a GUI display on a display device that are manipulable or selectable by the user to activate that identified contingent procedure (task 708).

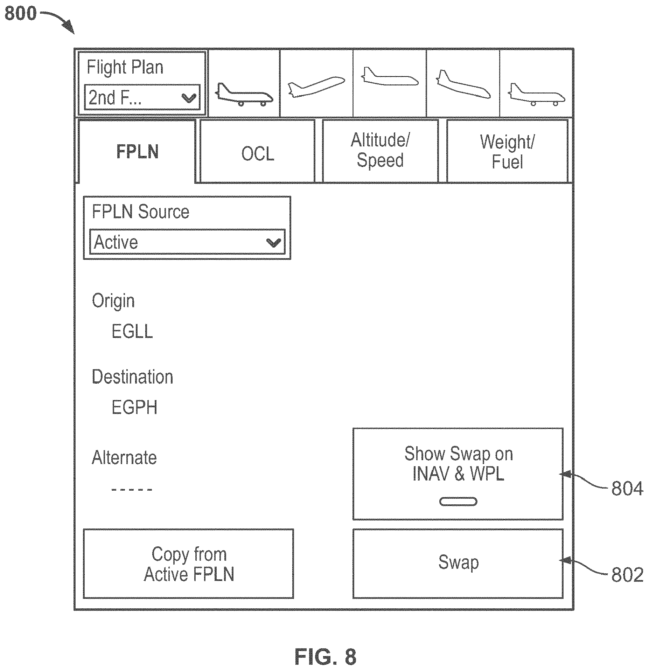

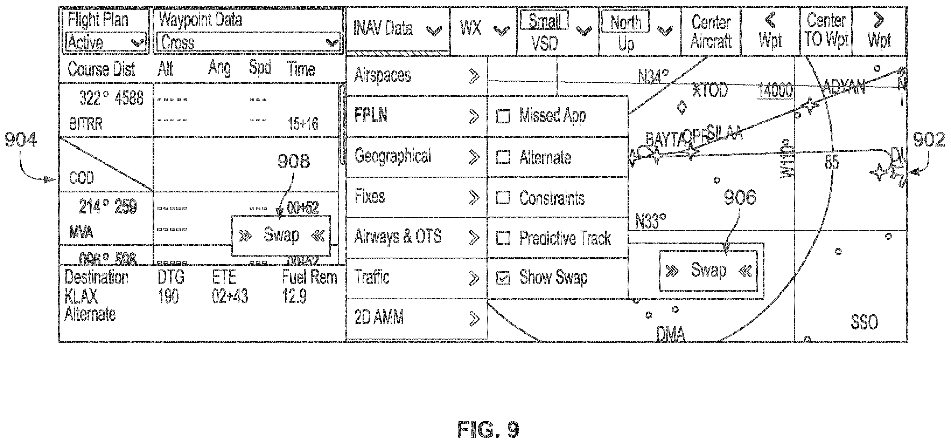

For example, as shown in FIG. 8, when the contingent procedure activation process 700 identifies the existing contingent departure procedure associated with the EGLL airport (e.g., the contingent departure procedure depicted in FIGS. 3-6) as being relevant to the current aircraft status, the processing system 108 may dynamically update a flight plan GUI display 800 to include a swap button 802 or similar selectable GUI element for activating or otherwise enabling the contingent departure procedure by swapping the contingent departure procedure for one or more waypoints of the currently active flight plan. In exemplary embodiments, the processing system 108 also generates or otherwise provides a show swap button 804 or similar selectable GUI element for initiating presentation of corresponding buttons or similar GUI elements for swapping the contingent departure procedure on one or more other GUI displays on the same display device and/or a different display device onboard or otherwise associated with the aircraft system 100 (e.g., from an EFB to a cockpit display or vice versa). For example, as shown in FIG. 9, in response to selection of the show swap button 804 to render additional instances of the swap button 802 on the navigational map GUI display 902 and the waypoint list GUI display 904, the processing system 108 dynamically updates those GUI displays 902, 904 to include corresponding swap buttons 906, 908 for swapping or otherwise substituting the identified contingent procedure into the flight plan. In this regard, the processing system 108 may automatically activate or otherwise select entries or elements within a drop-down menu or other GUI element on the navigational map display 902 to arrive at the depiction of the swap button 906 on or overlying the navigational map display 902 without requiring the pilot or other user to manually navigate through a sequence of menu options and corresponding input selections to arrive at the swap button 906.

Referring again to FIG. 7, after providing one or more GUI elements for activating the identified contingent procedure, the contingent procedure activation process 700 monitors for activation of the contingent procedure (task 710). In this regard, the contingent procedure may be activated by a pilot or other user manually selecting a swap button 802, 906, 908 or similar GUI element on a GUI display. Additionally, or alternatively, in some embodiments, the identified contingent procedure may be automatically activated in response to detecting the occurrence of an anomalous event associated with the identified contingent procedure. For example, if a contingent departure procedure is associated with an engine out event, the processing system 108 may automatically determine that the contingent departure procedure should be activated in response to current aircraft status information indicative of an engine out event during a period of operation when the contingent departure procedure is otherwise relevant to the current flight phase, the current geographic location and/or other current status information. In response to activation of the identified contingent procedure, the contingent procedure activation process 700 automatically updates the flight plan to include or otherwise incorporate the user-configured route and other criteria for the identified contingent procedure (task 712). For example, the processing system 108 may retrieve the information defining the waypoints, route segments, altitude criteria, speed criteria and/or other user-configured information defining the user-configured route associated with the identified contingent procedure from the data storage element 124 and provide the user-configured route information or corresponding commands or instructions to the FMS 116 to substitute or otherwise incorporate the user-configured route in place of at least a portion of the active flight plan. Upon the FMS 116 updating the flight plan to incorporate the user-configured route, the FMS 116 and/or other avionics systems 118 onboard the aircraft may automatically initiate autonomous operation of the aircraft 102 to execute or otherwise effectuate the user-configured route associated with the identified contingent procedure. In this manner, the aircraft automation may autonomously implement the contingent procedure previously configured by the pilot or another user in an automated manner without requiring additional pilot inputs or increasing workload.

In one or more embodiments, in the absence of the contingent procedure being activated, the loop defined by tasks 702, 704, 706, 708 and 710 may repeat throughout operation of the aircraft to dynamically remove and/or add GUI elements for activating an existing contingent procedure depending on the current aircraft status information. For example, once the aircraft transitions to a cruise flight phase, the contingent procedure activation process 700 may automatically remove the buttons 802, 804 related to a contingent departure procedure that was previously-identified as being relevant during the takeoff and/or departure phases of flight. In this manner, the contingent procedure activation process 700 automatically declutters the GUI display(s) associated with the aircraft 102 when there are no existing contingent procedures relevant to the current aircraft status.

For the sake of brevity, conventional techniques related to graphical user interfaces, graphics and image processing, avionics systems, aircraft procedures and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

The subject matter may be described herein in terms of functional and/or logical block components, and with reference to symbolic representations of operations, processing tasks, and functions that may be performed by various computing components or devices. It should be appreciated that the various block components shown in the figures may be realized by any number of hardware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices. Furthermore, embodiments of the subject matter described herein can be stored on, encoded on, or otherwise embodied by any suitable non-transitory computer-readable medium as computer-executable instructions or data stored thereon that, when executed (e.g., by a processing system), facilitate the processes described above.

The foregoing description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements directly connected to one another, additional intervening elements, devices, features, or components may be present in an embodiment of the depicted subject matter. In addition, certain terminology may also be used herein for the purpose of reference only, and thus are not intended to be limiting.

The foregoing detailed description is merely exemplary in nature and is not intended to limit the subject matter of the application and uses thereof. Furthermore, there is no intention to be bound by any theory presented in the preceding background, brief summary, or the detailed description.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the subject matter in any way. Rather, the foregoing detailed description will provide those skilled in the art with a convenient road map for implementing an exemplary embodiment of the subject matter. It should be understood that various changes may be made in the function and arrangement of elements described in an exemplary embodiment without departing from the scope of the subject matter as set forth in the appended claims. Accordingly, details of the exemplary embodiments or other limitations described above should not be read into the claims absent a clear intention to the contrary.

## Claims

1. A method comprising:
obtaining a user-configured route for operating a vehicle;
providing a first graphical user interface (GUI) display including one or more GUI elements for receiving one or more user input values defining the user-configured route;
automatically generating an identifier associated with the user-configured route based on the one or more user input values, resulting in an autogenerated identifier; and
thereafter generating a graphical representation of the user-configured route that includes the autogenerated identifier associated with the user-configured route.

2. The method of claim 1, wherein:
the vehicle comprises an aircraft; and
the user-configured route comprises a contingent procedure for the aircraft.

3. The method of claim 2, wherein generating the graphical representation comprises updating a graphical representation of the contingent procedure to include the autogenerated identifier.

4. The method of claim 3, wherein:
obtaining the user-configured route comprises obtaining the contingent procedure manually defined by a user on a navigational map display; and
updating the graphical representation of the contingent procedure comprises updating the navigational map display to include a graphical representation of the autogenerated identifier in association with the graphical representation of the contingent procedure concurrently displayed on the navigational map display.

5. The method of claim 2, wherein:
the first GUI display includes a first GUI element for receiving a contingent procedure type associated with the contingent procedure; and
generating the graphical representation of the user-configured route comprises generating a graphical representation of the contingent procedure that includes the autogenerated identifier in response to selection of the contingent procedure type.

6. The method of claim 2, further comprising transmitting the contingent procedure to one or more additional aircraft over a communications network.

7. The method of claim 1, further comprising providing a GUI element overlying a navigational map GUI display to save a contingent procedure, wherein obtaining the user-configured route comprises obtaining the user-configured route on the navigational map GUI display.

8. The method of claim 7, wherein providing the first GUI display comprises providing a contingent procedure editing GUI display in response to user selection of the GUI element, wherein:
the contingent procedure editing GUI display includes a text box for receiving an input value for a name to be associated with the contingent procedure comprising the user-configured route; and
automatically generating the identifier comprises automatically generating the autogenerated identifier comprising at least a portion of the input value for the name.

9. The method of claim 8, wherein generating the graphical representation of the user-configured route that includes the autogenerated identifier associated with the user-configured route comprises dynamically updating the graphical representation of the user-configured route on the navigational map GUI display to include the autogenerated identifier adjacent to a waypoint of the user-configured route.

10. The method of claim 9, wherein dynamically updating the graphical representation of the user-configured route comprises rendering the graphical representation of the user-configured route using a different visually distinguishable characteristic in response to saving the contingent procedure.

11. The method of claim 7, wherein providing the first GUI display comprises providing a contingent procedure editing GUI display in response to user selection of the GUI element, wherein the contingent procedure editing GUI display includes a second GUI element for receiving an input value for a flight procedure type to be associated with the contingent procedure comprising the user-configured route.

12. The method of claim 1, further comprising:
providing, on a second GUI display, a GUI element for displaying a second GUI element for swapping the user-configured route for at least a portion of an active flight plan on a different GUI display; and
providing the second GUI element on the different GUI display in response to user selection of the GUI element, wherein:
providing the GUI element comprises providing a show swap button for swapping the user-configured route on at least one of a navigational map GUI display and a waypoint list GUI display; and
providing the second GUI element comprises providing a swap button on the at least one of the navigational map GUI display and the waypoint list GUI display in response to user selection of the show swap button.

13. The method of claim 1, further comprising automatically activating the user-configured route based on a current status of the vehicle, wherein one or more systems onboard the vehicle autonomously operates the vehicle to execute the user-configured route in response to activating the user-configured route.

14. A computer-readable medium having computer-executable instructions stored thereon that, when executed by a processing system, cause the processing system to:
obtain a user-configured route for operating an aircraft from a navigational map graphical user interface (GUI) display;
provide a contingent procedure editing GUI display including one or more GUI elements for receiving one or more user input values defining the user-configured route;
automatically generate an identifier associated with the user-configured route based on the one or more user input values, resulting in an autogenerated identifier;
store a contingent procedure maintaining an association between the autogenerated identifier and the user-configured route; and
after storing the contingent procedure, generate a graphical representation of the user-configured route that includes the autogenerated identifier associated with the contingent procedure.

15. A system comprising:
a display device to display a navigational map display;
a user input device to receive user inputs to define a user-configured route the navigational map display; and
a processing system coupled to the display device and the user input device to:
provide, on the display device, a contingent procedure editing graphical user interface (GUI) display including one or more GUI elements for receiving one or more user input values defining the user-configured route;
automatically generate an identifier associated with the user-configured route based on the one or more user input values, resulting in an autogenerated identifier; and
update a graphical representation of the user-configured route on the navigational map display to include the autogenerated identifier associated with the user-configured route.
